(19) Europäisches Patentamt
European Patent Office
Office européen des brevets

(11) **EP 1 213 929 A2**

(12) **EUROPÄISCHE PATENTANMELDUNG**

(43) Veröffentlichungstag:
**12.06.2002  Patentblatt 2002/24**

(51) Int Cl.⁷: **H04N 9/68**

(21) Anmeldenummer: **01128440.3**

(22) Anmeldetag: **05.12.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **09.12.2000  DE 10061451**

(71) Anmelder: **Grundig AG**
**90471 Nürnberg (DE)**

(72) Erfinder: **Valek, Tomas**
**90471 Nürnberg (DE)**

(54) **Vorrichtung zur Verarbeitung von R-, G-, B-Signalen bei einem digital angesteuerten Display**

(57)    Die Erfindung betrifft eine Vorrichtung zur Verarbeitung von RGB-Signalen bei einem digital angesteuerten Display, insbesondere einem Plasmadisplay. Die Vorrichtung weist vorzugsweise eine Schaltung zur Entzerrung von vorverzerrten RGB-Signalen und ein Display auf. Zwischen der Schaltung zur Entzerrung und dem Display ist weiterhin eine Korrektureinheit vorgesehen, die zur Reduzierung von Farbübersättigungen dient.

## FIGUR 1

Printed by Jouve, 75001 PARIS (FR)

**Beschreibung**

Die Erfindung betrifft eine Vorrichtung zur Verarbeitung von R, G, B-Signalen bei einem digital angesteuerten Display, beispielsweise einem Plasmadisplay. Derartige Plasmadisplays sind beispielsweise in drei Artikeln beschrieben, die in der Zeitschrift "FERNSEH-UND KINO-TECHNIK", 54. Jahrgang, Heft 8 - 9/2000, auf den Seiten 512 -531 veröffentlicht wurden.

Bei Fernsehübertragungssystemen, bei denen zur Bildwiedergabe eine Kathodenstrahlröhre verwendet wird, erfolgt bei der Bildaufnahme bzw. senderseitig üblicherweise eine Gamma-Vorverzerrung der Fernsehsignale, um die Wiedergabecharakteristik der wiedergabeseitig verwendeten Kathodenstrahlröhren zu kompensieren.

Wird nun zur Bildwiedergabe keine Kathodenstrahlröhre verwendet wird, sondern ein digital angesteuertes Display, beispielsweise ein Plasmadisplay, dann muss wiedergabeseitig vor dem Ansteuern des Displays eine Schaltung zur Gamma-Entzerrung in den Signalweg eingefügt werden, um die aufnahmebzw. senderseitige Gamma-Vorverzerrung zu kompensieren. Bei dieser Gamma-Entzerrung handelt es sich um eine in etwa quadratische Abbildung mit einem Gammafaktor von 2,2.

Aufgrund dieser Gamma-Entzerrung treten wegen der Quantisierung der Gammakurve bei kleinen Eingangsamplituden Farbübersättigungserscheinungen auf. Dies passiert beispielsweise dann, wenn eine oder zwei der Farbkomponenten R, G oder B nach der Gammaentzerrung im Rahmen einer Quantisierung zu Null gerundet oder geklippt werden, während die anderen Farbkomponenten den Wert 1 erhalten. Die dann störend in Erscheinung tretende Farbübersättigung wird dadurch noch verstärkt, dass bei Verwendung eines Plasmadisplays mit einer Auflösung von 8 Bits die untersten Helligkeitsstufen deutlich unterscheidbar sind, weil das menschliche Auge eine logarithmische Helligkeitswahrnehmung aufweist.

Die Erfindung ist aber nicht nur auf Vorrichtungen mir Gamma-Entzerrungsschaltungen anwendbar. Sie kann auch bei Schaltungen ohne Gamma-Entzerrung angewendet werden.

Die Aufgabe der Erfindung besteht darin, einen Weg aufzuzeigen, wie derartige Farbübersättigungen vermieden werden können.

Diese Aufgabe wird durch eine Vorrichtung mit den im Anspruch 1 angegebenen Merkmalen gelöst. Vorteilhafte Ausgestaltungen und Weiterbildungen der Erfindung sind Gegenstand der abhängigen Patentansprüche.

Die Vorteile der Erfindung bestehen vor allem darin, dass bei digital angesteuerten Displays, insbesondere Plasmadisplays, keine Farbübersättigungen auftreten. Dies ist vor allem bei kleinen Eingangsamplituden von Bedeutung, da bei digitalen Displays aufgrund der verwendeten reduzierten Auflösung von 8 Bits die untersten Helligkeitsstufen deutlich unterscheidbar sind.

Bei einer ersten Ausführungsform der Erfindung, welche in den Ansprüchen 5 - 7 näher spezifiziert ist, ist die Korrektureinheit sehr einfach realisierbar. Sie kann aus einfachen Logikschaltungen bestehen.

Eine zweite Ausführungsform der Erfindung ist Gegenstand des Anspruchs 8. Diese Ausführungsform ist bezüglich ihrer Realisierung aufwendiger als die in den Ansprüchen 5 - 7 angegebene Ausführungsform, führt jedoch zu besseren Ergebnissen. Sie benötigt Quantisierungs- und Rechenvorgänge gemäß den im Anspruch 6 angegebenen Beziehungen.

Bei der dritten, im Anspruch 9 angegebenen Ausführungsform erfolgt die Ermittlung der korrigierten Farbkomponentensignale mittels eines Iterationsvorganges, welcher in einem geeignet programmierten Prozessor erfolgt.

Bei einer vierten Ausführungsform der Erfindung, welche im Anspruch 10 angegeben ist, erfolgt die Ermittlung der korrigierten Farbkomponentensignale unter Verwendung des Luminanz- und der Farbdifferenzsignale, die aus den entzerrten Farbkomponentensignalen abgeleitet werden. Diese Ausführungsform ist einfach realisierbar.

Weitere vorteilhafte Eigenschaften der Erfindung ergeben sich aus der Erläuterung von Ausführungsbeispielen anhand der Figuren. Es zeigt

Figur 1 ein Ausführungsbeispiel für die erste Ausführungsform der Erfindung,

Figur 2 ein Ausführungsbeispiel für die zweite Ausführungsform der Erfindung,

Figur 3 ein Flussdiagramm zur Erläuterung der dritten Ausführungsform für die Erfindung und

Figur 4 ein Ausführungsbeispiel für die vierte Ausführungsform der Erfindung.

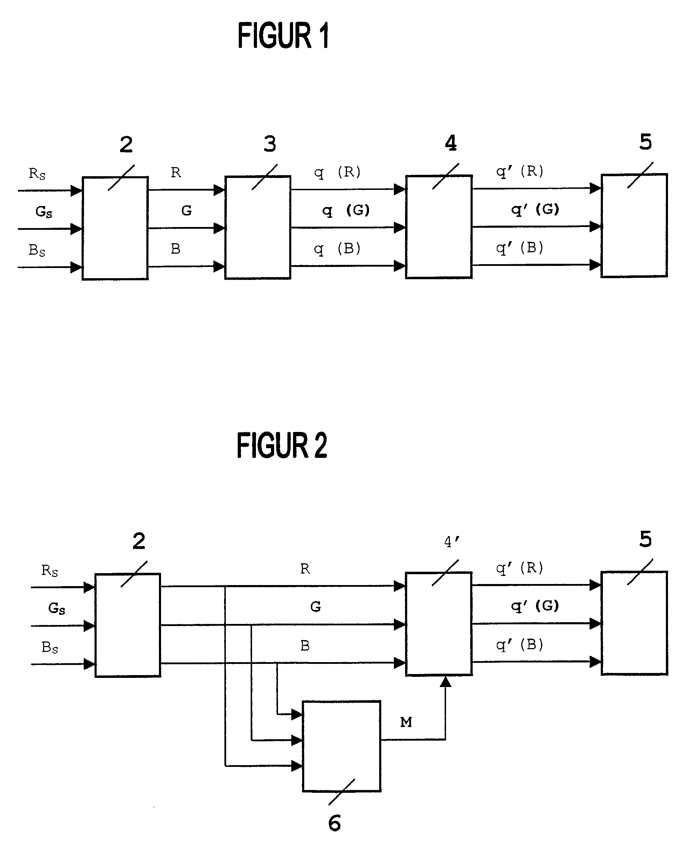

Die Figur 1 zeigt ein Ausführungsbeispiel für die erste Ausführungsform der Erfindung. Dem Eingang der in der Figur 1 dargestellten Anordnung werden aufnahme- bzw. senderseitig gammavorverzerrte Farbkomponentensignale $R_S$, $G_S$, $B_S$ zugeführt. Diese gelangen an eine Schaltung 2 zur Entzerrung der gammavorverzerrten Farbkomponentensignale, die an ihrem Ausgang entzerrte Farbkomponentensignale R, G, B zur Verfügung stellt.

Diese werden einem Quantisierer 3 zugeführt, der ausgangsseitig quantisierte Signale q(R), q(B), q(G) erzeugt. Diese quantisierten Signale werden in einer Korrektureinheit 4 einem Korrekturvorgang unterworfen, so dass am Ausgang der Korrektureinheit 4 korrigierte, quantisierte Farbkomponentensignale q'(R), q'(B) und q'(G) zur Ansteuerung des Plasmadisplays 5 zur Verfügung stehen.

Zur Veranschaulichung des Korrekturvorganges sei beispielhaft angenommen, dass am Ausgang des Entzerrers 2 sehr kleinen Amplituden entsprechende Farbkomponentensignale R = 0,498; G = 0,574 und B = 0,498 vorliegen. Dies entspricht einem Bildinhalt mit einem leicht grünen Farbeindruck. Durch den nachfolgenden Quantisierungsvorgang im Quantisierer 3 erfolgt eine Rundung der genannten Werte derart, dass am Ausgang des Quantisierers 3 folgende quantisierte Signale zur Verfügung stehen: q(R) = 0; q(G) =1; q(B) = 0. Würde das Plasmadisplay mit diesen Signalen angesteuert, dann würde ein übersättigtes Grünbild auf dem Plasmadisplay angezeigt.

Um dies zu vermeiden, wird in der Korrektureinheit 4 dafür gesorgt, dass das Verhältnis der Farbkomponentensignale zueinander nach der Quantisierung bzw. Rundung zumindest in etwa dem Verhältnis dieser Farbkomponentensignale zueinander vor der Quantisierung bzw. Rundung entspricht.

Dies wird dadurch erreicht, dass dann, wenn nach der Quantisierung bzw. Rundung eine der Farbkomponenten 0 ist und mindestens eine der anderen Farbkomponenten von 0 verschieden ist, die erstgenannte Farbkomponente auf den Wert 1 gesetzt wird.

Für die oben beispielhaft genannten Werte der Farbkomponentensignale bedeutet dies:

R = 0,498 → q(R) = 0 → q'(R) = 1

G = 0,574 → q(G) = 1 → q'(G) = 1

B = 0,498 → q(B) = 0 → q'(B) = 1

Zusätzlich zu dieser Regel kann im Sinne einer Weiterbildung der Regel eine Mehrheitsentscheidung zur Anwendung kommen. Hat eine der Farbkomponenten nach der Quantisierung bzw. Rundung den Wert 1 und die anderen beiden den Wert 0, dann wird auch der Wert der erstgenannten Farbkomponente auf den Wert 0 gesetzt.

Für die oben beispielhaft genannten Werte der Farbkomponentensignale bedeutet dies:

R = 0,498 → q(R) = 0 → q'(R) = 0

G = 0,574 → q(G) = 1 → q'(G) = 0

B = 0,498 → q(B) = 0 → q'(B) = 0

Die Figur 2 zeigt ein Ausführungsbeispiel für die zweite Ausführungsform der Erfindung. Dem Eingang der in der Figur 2 dargestellten Anordnung werden aufnahme- bzw. senderseitig gammavorverzerrte Farbkomponentensignale $R_S$, $G_S$, $B_S$ zugeführt. Diese gelangen an eine Schaltung 2 zur Entzerrung der gammavorverzerrten Farbkomponentensignale, die an ihrem Ausgang entzerrte Farbkomponentensignale R, G, B zur Verfügung stellt.

Diese werden einer Korrektureinheit 4' und einer Schaltung 6 zur Bestimmung des Maximums M der drei Farbkomponentensignale zugeführt. Die Schaltung 6 kann gegebenenfalls auch Bestandteil der Korrektureinheit 4' sein. In der Korrektureinheit 4' erfolgt eine Quantisierung der Signale und eine Ermittlung korrigierter Signale gemäß den folgenden Beziehungen:

q'(R) = q[R · q(M)/M];
q'(G) = q[G · q(M)/M];
q'(B) = q[B · q(M)/M].

Dabei bezeichnen M das Maximum der drei Farbkomponentensignale und q(x) bzw. q'(x) quantisierte Werte der jeweiligen Variable x.

Für das oben genannte Zahlenbeispiel, gemäß welchem R = 0,498; G = 0,574 und B = 0,498 ist, ergibt sich:

M = Max (R, G, B) = 0,574;

q(M) = 1, da alle Werte, die im Bereich $0,5 \leq q(x) < 1,5$ sind, auf den Wert 1 gerundet werden;

q'(R) = q[0,498 · 1/0,574] = q[0,868] = 1;
q'(G) = q[0,574 · 1/0,574] = q[1] = 1;
q'(B) = q[0,498 · 1/0,574] = q[0,868] = 1.

Dieses Ergebnis zeigt, dass bei Verwendung der genannten Beziehungen erreicht wird, dass das Verhältnis der Farbkomponenten R, G, B am Ausgang der Schaltung 2 in etwa dem Verhältnis der korrigierten Signale entspricht, die dem Display 5 zugeführt werden. Es tritt keine Farbübersättigung auf.

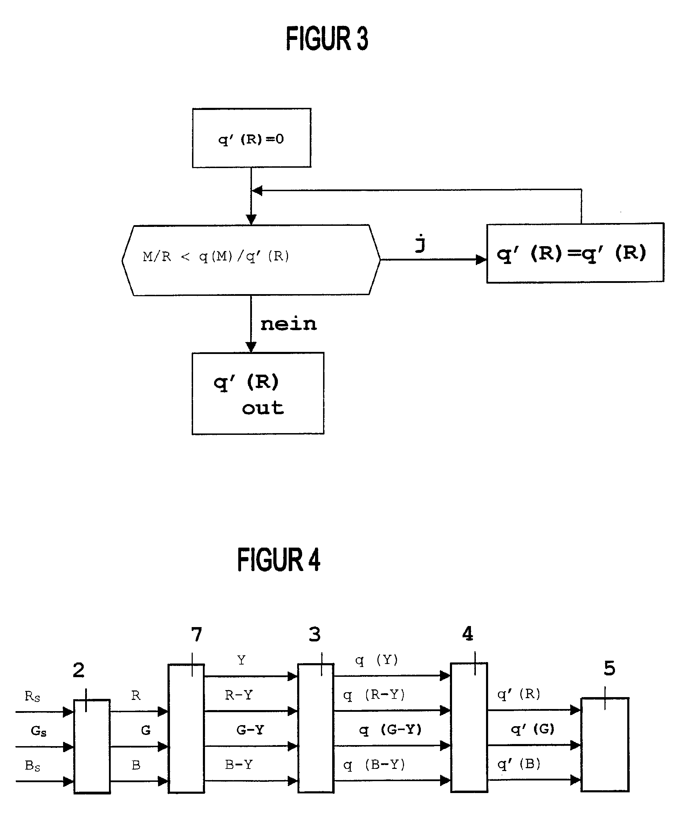

Alternativ zu der anhand der Figur 2 beschriebenen Ausführungsform kann die Ermittlung der korrigierten Signale q'(R), q'(G) und q'(B) auch mittels eines Prozessors erfolgen, der den durch das Flussdiagramm gemäß Figur 3 beschriebenen Iterationsvorgang durchführt. In der Figur 3 ist dieser Iterationsvorgang für die Farbkomponente R veranschaulicht. Die Ermittlung der beiden anderen korrigierten Signale erfolgt auf entsprechende Weise. Bei der Realisierung dieser dritten Ausführungsform ist der Prozessor derart programmiert, dass eine eventuell auftretende Division durch den Wert 0 nicht zu einem unzulässigen Ergebnis führt, sondern zu einem sehr großen endlichen Wert. Anhand dieses Wertes wird überprüft, ob die im Flussdiagramm angegebene Ungleichung erfüllt ist oder nicht.

Für das oben genannte Zahlenbeispiel mit R = 0,498; G = 0,574 und B = 0,498 ergibt sich:

q'(R) = 1;
q'(G) = 1;
q'(B) = 1.

Auch bei dieser Ausführungsform wird erreicht, dass das Verhältnis der Farbkomponenten am Ausgang der Schaltung 2 in etwa dem Verhältnis der korrigierten Signale entspricht, die dem Display 5 zugeführt werden. Es tritt folglich auch hier keine Farbübersättigung auf.

Die Figur 4 zeigt ein Ausführungsbeispiel für die vierte Ausführungsform der Erfindung. Dem Eingang der in der Figur 4 dargestellten Anordnung werden aufnahme- bzw. senderseitig gammavorverzerrte Farbkomponentensignale $R_S$, $G_S$, $B_S$ zugeführt. Diese gelangen an eine Schaltung 2 zur Entzerrung der gammavorverzerrten Farbkomponentensignale, die an ihrem Ausgang entzerrte Farbkomponentensignale R, G, B zur Verfügung stellt.

Dieser werden einer Matrixschaltung 7 zugeführt, welche an ihrem Ausgang ein Leuchtdichtesignal Y und Farbdifferenzsignale R-Y, G-Y und B-Y zur Verfügung stellt. Diese werden in einem Quantisierer 3 einem Quantisierungsvorgang unterworfen, so dass am Ausgang des Quantisierers 3 quantisierte Signale q(Y), q(R-Y),

q(G-Y)und q(B-Y) bereitgestellt werden. Diese werden in einer Rechnereinheit 8 in korrigierte Signale q'R), q'G) und q'(B)umgewandelt, wobei diese Umwandlung gemäß den folgenden Beziehungen durchgeführt wird:

$$q'(R) = q(Y) + q(R-Y);$$

$$q'(G) = q(Y) + q(G-Y);$$

$$q'(B) = q(Y) + q(B-Y).$$

Wendet man diese Beziehungen auf die Werte R = 0,498; G = 0,574 und B = 0,498 an, so ergibt sich insgesamt:

$$Y = a \cdot R + b \cdot G + c \cdot B = 0{,}543.$$

Dabei sind die Koeffizienten a = 0,3; b = 0,59 und c = 0,11 übliche Umrechnungskoeffizienten.

q(Y) = 1;
q'(R) = 1,
q'(G) = 1,
q'(B) = 1.

Auch bei dieser vierten Ausführungsform wird das gewünschte Ergebnis erreicht, dass das Verhältnis der Farbkomponenten am Ausgang der Schaltung 2 in etwa dem Verhältnis der korrigierten Signale entspricht, die dem Display 5 zugeführt werden. Es tritt folglich auch hier keine Farbübersättigung auf.

Bei den oben beschriebenen Ausführungsbeispielen bzw. Ausführungsformen wurde im Rahmen der Quantisierung von einem Rundungsvorgang Gebrauch gemacht. Eine alternative Ausführungsform besteht in einem Abschneiden bzw. Clipping der Nachkommastellen.

**Patentansprüche**

1. Vorrichtung zur Verarbeitung von RGB-Signalen bei einem digital angesteuerten Display mit einem Display,
   **dadurch gekennzeichnet, dass**
   vor dem Display (5) eine Korrektureinheit (4; 4', 6; 3, 7, 8) vorgesehen ist, die zur Reduzierung von Farbübersättigungen dient.

2. Vorrichtung nach Anspruch 1,
   **dadurch gekennzeichnet, dass**
   eine Schaltung zur Entzerrung (2) von vorverzerrten RGB-Signalen vorgesehen ist.

3. Vorrichtung nach Anspruch 2,
   **dadurch gekennzeichnet, dass**
   die Korrektureinheit (4; 4', 6; 3, 7, 8) zwischen der Schaltung zur Entzerrung (2) und dem Display (5) angeordnet ist.

4. Vorrichtung nach einem oder mehreren der Ansprüche 1 bis 3,
   **dadurch gekennzeichnet, dass**
   die Korrektureinheit zur Reduzierung von Farbübersättigungen beim Vorliegen kleiner Signalamplituden dient.

5. Vorrichtung nach einem oder mehreren der Ansprüche 1 bis 4,
   **dadurch gekennzeichnet, dass**
   zwischen der Schaltung zur Entzerrung (2) und der Korrektureinheit (4) ein Quantisierer (3) vorgesehen ist und dass der Korrektureinheit (4) quantisierte Signale zugeführt werden.

6. Vorrichtung nach Anspruch 5,
   **dadurch gekennzeichnet, dass**
   die Korrektureinheit dann, wenn das R-, G- oder B-Signal nach der Quantisierung den Wert 0 aufweist und mindestens eine der beiden anderen Farbkomponenten den Wert 1, das R-, G- oder B-Signal auf den Wert 1 setzt.

7. Vorrichtung nach Anspruch 6,
   **dadurch gekennzeichnet, dass**
   die Korrektureinheit dann, wenn das R-, G- oder B-Signal nach der Quantisierung den Wert 1 aufweist und die beiden anderen Farbkomponenten den Wert 0, das R-, G- oder B-Signal im Sinne einer Mehrheitsentscheidung auf den Wert 0 gesetzt wird.

8. Vorrichtung nach einem der mehreren der Ansprüche 1 bis 4,
   **dadurch gekennzeichnet, dass**
   die Korrektureinheit die korrigierten Werte nach folgenden Beziehungen ermittelt:

q'(R) = q[R · q(M)/M];
q'(G) = q[G · q(M)/M];
q'(B) = q[B · q(M)/M];

wobei M = max (R, G, B) und
   q(x) und q'x) quantisierte Werte von x sind.

9. Vorrichtung nach einem der mehreren der Ansprüche 1 bis 4,
   **dadurch gekennzeichnet, dass**
   die Korrektureinheit einen Prozessor aufweist und ausgangsseitig Korrektursignale zur Verfügung stellt, die jeweils im Rahmen eines Iterationsvorganges ermittelt werden.

10. Vorrichtung nach einem der mehreren der Ansprüche 1 bis 4,
    **dadurch gekennzeichnet, dass**
    zwischen der Vorrichtung zur Entzerrung (2) und dem Quantisierer (3) eine Matrixschaltung (7) vorgesehen ist, die zur Umwandlung der RGB-Signale in Luminanz- und Farbdifferenzsignale dient, und dass die korrigierten Werte nach folgenden Beziehungen ermittelt werden:

$$q'(R) = q(Y) + q(R\text{-}Y)$$

$$q'(G) = q(Y) + q(G\text{-}Y)$$

$$q'(B) = q(Y) + q(B\text{-}Y),$$

wobei q(x) quantisierte Werte von x sind.

# FIGUR 1

# FIGUR 2

# FIGUR 3

```
        ┌──────────────┐
        │  q'(R)=0     │
        └──────┬───────┘
               │        ┌────────────────────┐
               │        │                    │
               ▼        │                    │
    ╱───────────────────╲      j     ┌───────────────────┐
   ╱  M/R < q(M)/q'(R)    ╲─────────▶│  q'(R)=q'(R)      │
    ╲───────────┬─────────╱          └───────────────────┘
               │
            nein
               │
               ▼
        ┌──────────────┐
        │  q'(R)       │
        │   out        │
        └──────────────┘
```

# FIGUR 4